# FASCICULE DE BREVET EUROPEEN

(11) **EP 1 733 446 B1**
(45) Date de publication et mention de la délivrance du brevet: **25.12.2013**
(21) Numéro de dépôt: 05739707.7
(22) Date de dépôt: 02.03.2005
(51) Int. Cl.: H01M 8/04, B60K 11/02

(54) **DISPOSITIF ET PROCEDE DE REFROIDISSEMENT D'UN MODULE DE PUISSANCE D'UNE PILE A COMBUSTIBLE**
EINRICHTUNG UND VERFAHREN ZUM KÜHLEN DES LEISTUNGSMODULS EINER BRENNSTOFFZELLE
DEVICE AND METHOD FOR COOLING THE POWER MODULE OF A FUEL CELL

(30) Priorité: 31.03.2004 FR 0403345
(43) Date de publication de la demande: 20.12.2006
(73) Titulaire: Renault SAS, 92100 Boulogne Billancourt (FR)
(72) Inventeur: ARCHER, Pascal, F-75014 Paris (FR)
(86) Numéro de dépôt international: PCT/FR2005/050139
(87) Numéro de publication internationale: WO 2005/096425

(56) Documents cités:
- WO-A-2004/006376
- DE-A- 10 152 233
- FR-A- 2 816 258
- FR-A- 2 830 926
- US-B1- 6 432 568

## Description

La présente invention concerne un dispositif et un procédé de refroidissement d'un module de puissance d'une pile à combustible, équipant notamment un véhicule automobile.

Les piles à combustible permettent la génération d'électricité par une réaction électrochimique entre un élément anodique et un élément cathodique, et sont connues pour alimenter en énergie des moteurs électriques de véhicules à propulsion électrique.

Les piles à combustible nécessitent une alimentation en carburant constituée d'un gaz riche en hydrogène. L'alimentation peut être assurée, dans le cas d'une application à un véhicule de transport, par stockage d'hydrogène dans un réservoir embarqué. Le stockage d'hydrogène à bord d'un véhicule présente cependant des dangers et requiert des réservoirs de masse élevée. Une solution intéressante consiste à fabriquer l'hydrogène in situ à partir d'un carburant facilement stockable dans le véhicule, tel que le méthanol ou l'essence, au moyen d'un reformeur. Lors de la procédure de reformage, la quantité d'eau nécessaire pour permettre de transformer le carburant et de produire de l'hydrogène est non négligeable. Dans ces conditions, pour qu'une pile à combustible soit utilisable dans le cas d'une application à un véhicule de transport, il est indispensable que le volume d'eau consommé par la pile à combustible soit inférieur ou égal au volume d'eau produit. En d'autres termes, il est indispensable que le bilan d'eau de la pile à combustible soit positif.

Les piles à combustible nécessitent une alimentation en réformat et en air comprimé. Avant l'introduction de ces gaz à l'intérieur de la pile, il est nécessaire de les refroidir à la température de fonctionnement de la pile afin d'éviter une condensation pouvant provoquer un disfonctionnement, et d'éviter un assèchement de la membrane de la pile.

On connaît, par la demande de brevet US 2002/000 4152, un dispositif permettant de refroidir une pile à combustible ainsi que l'hydrogène et l'air alimentant respectivement la cathode et l'anode de ladite pile. Cependant, un tel dispositif ne prévoit pas de moyens permettant de refroidir les gaz d'échappement de la pile à combustible afin que la pile à combustible puisse être autonome et applicable à un véhicule de transport.

La demande de brevet EP-A-0 741 428 prévoît un dispositif de refroidissement d'une pile à combustible comprenant un circuit principal d'eau pure dé-ionisée, traversant la pile à combustible, et équipé d'un échangeur thermique traversé par le premier fluide du circuit principal et par un second fluide d'un circuit secondaire apte à refroidir le premier fluide. Le circuit secondaire comprend également un moyen apte à chauffer le second fluide lors du démarrage à froid de la pile à combustible afin qu'elle atteigne rapidement sa température de fonctionnement optimale. Un tel dispositif possède l'inconvénient de ne pas prévoir le refroidissement d'élément autre que la pile à combustible et nécessite un moyen spécifique afin d'assurer une mise en température rapide de la pile à combustible lors d'une phase de démarrage à froid.

La demande de brevet DE 101 52 233 décrit un dispositif de refroidissement pour module de puissance muni d'une pile à combustible et comprenant un premier circuit de fluide caloporteur traversant la pile, et un second circuit de fluide caloporteur refroidissant un radiateur, les fluides caloporteurs véhiculés par les premier et second circuits réalisant entre eux un échange thermique à l'intérieur d'une pompe à chaleur de manière que la température du second circuit soit inférieure à celle du premier circuit.

La présente invention a pour objet de prévoir un dispositif de refroidissement d'un module de puissance d'une pile à combustible permettant d'assurer de façon simplifiée et particulièrement efficace le refroidissement de l'ensemble des composants du module de puissance de la pile à combustible.

A cet effet, le dispositif de refroidissement d'un module de puissance comprenant une pile à combustible comprenant une partie anodique et une partie cathodique, notamment pour véhicule automobile, comprend un circuit principal de fluide caloporteur traversant la pile à combustible. Le circuit principal de fluide caloporteur traverse une partie haute température d'un radiateur en amont de la pile à combustible. Le dispositif comprend en outre un circuit auxiliaire de fluide caloporteur, en dérivation sur le circuit principal pour recevoir une partie du fluide caloporteur dudit circuit principal issu de la partie haute température du radiateur, traversant une partie basse température dudit radiateur apte à refroidir le fluide caloporteur à une température inférieure à la température du fluide caloporteur dans le circuit principal.

Un tel dispositif présente l'avantage de permettre un refroidissement par le circuit principal et par le circuit auxiliaire. Il devient ainsi possible de refroidir les éléments de l'ensemble de génération d'électricité, avec un même fluide caloporteur, à différents niveaux de température.

Un tel dispositif, de construction particulièrement simple, permet également d'engendrer un coût restreint de fabrication. Il nécessite uniquement de prévoir un circuit auxiliaire de fluide caloporteur, en dérivation sur le circuit principal, traversant une partie basse température du radiateur. Il n'est pas nécessaire de prévoir la circulation d'un autre, fluide, par exemple un fluide frigorigène, engendrant un surcoût énergétique particulièrement important afin d'obtenir une température de refroidissement relativement basse. Il devient ainsi possible grâce au radiateur présentant une entrée et deux sorties, de refroidir les éléments de l'ensemble du module de puissance avec un même fluide caloporteur, à différents niveaux de températures. Il est cependant envisageable de prévoir deux radiateurs distincts.

Dans un mode de réalisation, le circuit auxiliaire de fluide caloporteur comprend une conduite d'entrée située entre la partie haute température et la pile à combustible, et une conduite de retour située entre la pile à combustible et une pompe apte à permettre la circulation du fluide caloporteur.

Le dispositif de refroidissement présente l'avantage d'être particulièrement économique en permettant une circulation par une seule pompe du fluide caloporteur dans le circuit principal et dans le circuit auxiliaire, à des niveaux de températures différents.

Le circuit principal peut avantageusement comprendre une branche de dérivation apte à isoler la partie haute température.

Le circuit secondaire peut comprendre également une branche de dérivation apte à isoler la partie basse température.

Un tel dispositif de refroidissement permet, en outre, d'isoler le radiateur et de faire atteindre rapidement à la pile sa température de fonctionnement optimale, généralement autour de 80°C à 90°C, lors de la phase de démarrage à froid en retardant le refroidissement du fluide caloporteur. Le dispositif permet donc de réduire le temps mis par la pile pour atteindre sa température de fonctionnement optimal sans avoir recours à un moyen spécifique supplémentaire pour réaliser un apport d'énergie thermique.

Le circuit auxiliaire peut comprendre, en aval de la partie basse température, un échangeur de chaleur post-anodique traversé par le fluide caloporteur et par les gaz issus de la partie anodique de la pile à combustible, et un échangeur de chaleur post-cathodique traversé par le fluide caloporteur et par les gaz issus de la partie cathodique de la pile à combustible.

Le dispositif de refroidissement permet de refroidir les gaz d'échappement de la pile à combustible à une température relativement basse, sensiblement inférieure à la température de refroidissement de la pile, afin de récupérer la vapeur d'eau contenue dans les gaz permettant d'obtenir un bilan d'eau du module de puissance positif.

Dans un mode de réalisation, l'échangeur de chaleur post-cathodique et l'échangeur post-anodique sont montés en parallèle entre eux. Avec une telle disposition, il est ainsi possible de minimiser les pertes de charges du circuit auxiliaire.

Dans un mode de réalisation, le dispositif comprend un reformeur alimentant en hydrogène la pile à combustible et un compresseur alimentant en air la pile à combustible, le circuit principal comprenant, en aval de la partie haute température, un échangeur de chaleur pré-anodique traversé par le fluide caloporteur et par l'hydrogène, et un échangeur de chaleur pré-cathodique traversé par le fluide caloporteur et par l'air. Les échangeurs de chaleur pré-cathodiques et pré-anodiques peuvent avantageusement être montés en parallèle entre eux. Lesdits échangeurs peuvent être situés en aval de la pile à combustible ou être montés en parallèle avec la pile.

Dans un autre mode de réalisation, le dispositif peut comprendre un reformeur alimentant en hydrogène la pile à combustible et un compresseur alimentant en air la pile à combustible, le circuit auxiliaire comprenant, en aval de la partie haute température, un échangeur de chaleur pré-anodique traversé par le fluide caloporteur et par l'hydrogène, et un échangeur de chaleur pré-cathodique traversé par le fluide caloporteur et par l'air.

Avec une telle disposition, il devient ainsi possible de refroidir les gaz d'échappement de la pile à combustible à une température relativement basse, sensiblement inférieure à la température de refroidissement de la pile, afin de récupérer la vapeur d'eau contenue dans les gaz et de permettre l'obtention d'un bilan d'eau du module de puissance positif.

Les échangeurs de chaleur pré-cathodique et pré-anodique peuvent être montés en parallèle entre eux, en aval des échangeurs post-anodique et post-cathodique,

Le dispositif de refroidissement pour véhicule automobile muni d'un groupe moto-propulseur équipé d'une boucle de refroidissement peut avantageusement comprendre des moyens de couplage thermique avec la boucle de refroidissement du groupe moto-propulseur, notamment lorsque le module de puissance sert d'auxiliaire à l'unité principale d'un véhicule à moteur thermique classique.

Avec un tel dispositif, il devient possible d'utiliser la chaleur engendrée dans le module de puissance, notamment lorsque le module de puissance sert d'auxiliaire à l'unité principale d'un véhicule à moteur thermique classique, pour préchauffer ou maintenir le moteur thermique à chaud dans le but de réduire la surconsommation et les émissions du moteur lors du démarrage à froid.

Il est également possible avec un tel dispositif d'utiliser la chaleur générée dans le module de puissance pour chauffer l'habitacle du véhicule, notamment lorsque le moteur thermique est arrêté.

Dans un mode de réalisation, le circuit principal comprend les moyens de couplage thermique pouvant être situé dans la branche de dérivation apte à isoler la partie haute température, ou entre la pompe et la partie haute température, ou sur la conduite de retour du circuit principal en amont de la pompe, ou encore situés sur une conduite montée en parallèle avec des conduites traversant les échangeurs de chaleur pré-anodique et pré-cathodique.

Dans un autre mode de réalisation, le circuit auxiliaire comprend les moyens de couplage thermique pouvant être situés dans la branche de dérivation apte à isoler la partie basse température, ou sur une conduite montée en parallèle avec les conduites traversant les échangeurs de chaleur pré-anodique et pré-cathodique, ou sur une conduite montée en parallèle avec les conduites traversant les échangeurs de chaleur post-anodique et post-cathodique, ou encore sur la conduite de retour du circuit auxiliaire.

Le radiateur peut être refroidi par l'air ambiant au moyen d'un ventilateur spécifique, le radiateur étant délocalisé par rapport à un radiateur moteur. En outre, un radiateur de climatisation est également refroidi par le ventilateur spécifique.

L'invention concerne également un procédé de refroidissement d'un module de puissance d'une pile à combustible au moyen d'une circulation d'un fluide caloporteur comprenant les étapes au cours desquelles, on sépare en amont de la pile à combustible le fluide caloporteur en un circuit principal et un circuit auxiliaire en dérivation sur le circuit principal pour recevoir une partie du fluide caloporteur dudit circuit principal issu de la partie haute température du radiateur. On fait circuler le fluide caloporteur dans les deux circuits à une température inférieure à la température de fonctionnement de la pile à combustible, on prélève les calories du fluide caloporteur du circuit principal lorsque la température du fluide caloporteur du circuit principal atteint la température de fonctionnement optimale de la pile à combustible, et on prélève les calories du fluide caloporteur du circuit auxiliaire de façon que la température du fluide caloporteur du circuit auxiliaire soit inférieure à la température du fluide caloporteur du circuit principal.

L'invention sera mieux comprise à l'étude de la description détaillée de modes de réalisation décrits à titre d'exemples nullement limitatifs, et illustrés par les dessins annexés sur lesquels:
- la figure 1 représente schématiquement une architecture d'un module de puissance d'une pile à combustible,
- la figure 2a montre schématiquement un dispositif de refroidissement d'un module de puissance d'une pile à combustible selon un premier mode de réalisation de l'invention,
- la figure 2b montre schématiquement un radiateur du dispositif de refroidissement du module de puissance de la figure 2a,
- la figure 3 montre schématiquement un couplage du dispositif de refroidissement de la figure 2 avec une boucle de refroidissennent d'un groupe moto-propulseur d'un vésicule automobile,
- la figure 4 montre schématiquement les différentes possibilités de couplage du dispositif de refroidissement avec la boucle de refroidissement du groupe moto-propulseur de la figure 3.
- la figure 5 montre schématiquement un dispositif de refroidissement d'un module de puissance d'une pile à combustible selon un second mode de réalisation de l'invention,
- la figure 6 montre schématiquement les différentes possibilités de couplage du dispositif de refroidissement de la figure 5 avec une boucle de refroidissement d'un groupe moto-propulseur,
- la figure 7 montre schématiquement un dispositif de refroidissement d'un module de puissance d'une pile à combustible selon un troisième mode de réalisation de l'invention,
- la figure 8 montre schématiquement les différentes possibilités de couplage du dispositif de refroidissement de la figure 7 avec une boucle de refroidissement d'un groupe moto-propulseur, et
- les figures 9 à 13 représentent les différentes modes d'intégration d'un radiateur du dispositif de refroidissement selon l'invention.

Les flèches en trait fort correspondent à des conduites qui sont traversées par un liquide, et les flèches en traits interrompus correspondent à des conduites traversées par des gaz.

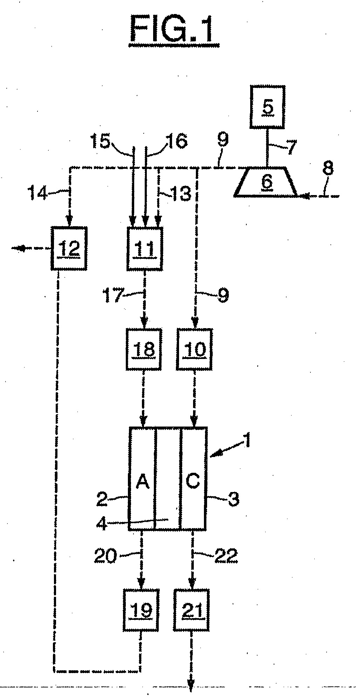

Sur la figure 1, une pile à combustible 1 comprend une anode 2 et une cathode 3 séparées par une membrane électrolytique 4 (représentées schématiquement). La pile à combustible 1 peut être avantageusement du type à membrane échangeuse de protons (PEMFC) à électrolyte solide. Une telle pile à combustible est constituée en réalité d'un empilement de cellules élémentaires branchées électriquement en série et séparées par des plaques bipolaires (non représentées sur la figure).

Un moteur 5 entraîne un compresseur 6, par l'intermédiaire d'un arbre 7, lors de la mise en fonctionnement du module de puissance de la pile à combustible 1. Le compresseur 6 est alimenté en air par une conduite d'amenée 8. L'air comprimé issu du compresseur 6 traverse au moyen d'une conduite 9 un échangeur pré-cathodique 10 et alimente la cathode 3 de la pile à combustible 1. L'air comprimé issu du compresseur 6 alimente également un reformeur 11 et un brûleur 12, respectivement par l'intermédiaire des conduites 13 et 14, lesdites conduites 13 et 14 étant reliées à la conduite 9.

Le reformeur 11, de conception classique, comprend également une conduite d'entrée de carburant 15, une conduite d'entrée d'eau 16 et une conduite de sortie d'hydrogène 17 traversant un échangeur pré-anodique 18 et alimentant l'anode 2 de la pile à combustible 1.

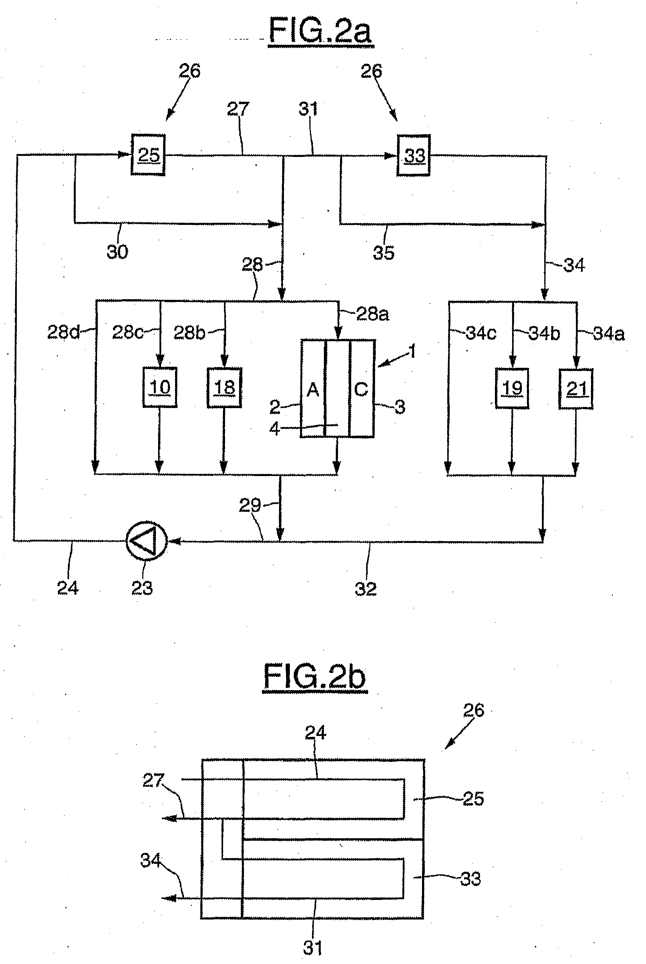

Les échangeurs pré-anodique et pré-cathodique 18, 10, par exemple des condenseurs, sont traversés par un liquide caloporteur (figure 2a) de façon à permettre un refroidissement de l'hydrogène et de l'air comprimé pour adapter leurs températures respectives à la température de fonctionnement de la pile à combustible 1 et pour récupérer la vapeur d'eau contenu dans lesdits gaz afin d'alimenter la conduite d'entrée 16 du reformeur 11 (non représentée). En effet, lors de la procédure de reformage, la quantité d'eau nécessaire pour la transformation du carburant en hydrogène est relativement importante.

Les gaz d'échappement issus de l'anode 2 et de la cathode 3 de la pile à combustible 1, lors de la production d'électricité, sont dirigés respectivement vers un échangeur post-anodique 19 par l'intermédiaire d'une conduite de sortie anodique 20 et vers un échangeur post-cathodique 21 par l'intermédiaire d'une conduite de sortie cathodique 22. Les échangeurs post-anodique et post-cathodique 19, 21, par exemple des condenseurs, sont traversés par le liquide caloporteur (figure 2a) de façon à récupérer la vapeur d'eau contenu dans lesdits gaz pour alimenter la conduite d'entrée 16 (non représenté).

La conduite de sortie anodique 20, après avoir traversé l'échangeur post-anodique 19, traverse le brûleur 12. Les gaz anodiques ainsi brûlés et les gaz cathodiques sont ensuite rejetés dans l'air ambiant. Ils peuvent également être utilisés pour être valorisés dans des systèmes de conception connue, par exemple dans une turbine de détente.

Il peut être également envisageable d'envoyer directement les gaz anodiques issus de la pile à combustible 1 vers le brûleur 12, puis de mélanger les gaz anodiques brûlés avec les gaz cathodiques afin de leur faire traverser un unique échangeur de chaleur (non représenté), par exemple un condenseur afin de récupérer l'eau présente dans les gaz pour alimenter le reformeur 11, avant leur échappement.

Sur la figure 2a est représenté le dispositif de refroidissement du module de puissance d'une pile à combustible 1. Le dispositif de refroidissement comprend un circuit principal et un circuit auxiliaire de liquide caloporteur.

Le circuit principal comprend une pompe 23, permettant la circulation du liquide caloporteur, reliée par l'intermédiaire d'une conduite 24 à la partie haute température 25 d'un radiateur 26. Une conduite de sortie 27 du liquide caloporteur de la partie haute température 25 est reliée à une conduite 28 comprenant quatre conduites dérivées, référencées respectivement 28a à 28d. La conduite 28a traverse la membrane électrolytique 4 de la pile à combustible 1. En réalité, le liquide caloporteur traverse la pile à combustible 1 par l'addition dans l'épaisseur des plaques bipolaires de conduites de refroidissement reliées à la conduite 28a. La conduite 28b traverse l'échangeur pré-anodique 18 pour réaliser le refroidissement de l'hydrogène issu du reformeur 11 (figure 1), la conduite 28c traversant l'échangeur pré-cathodique 10 pour réaliser le refroidissement de l'air comprimé issu du compresseur 6 (figure 1). La conduite 28d permet de détourner une partie du débit du liquide caloporteur traversant la conduite 28, issue de la partie haute température 25. Toutefois, il est également envisageable de ne pas prévoir une telle conduite 28d. La pile à combustible 1, l'échangeur pré-anodique 18 et l'échangeur pré-cathodique 10 sont ainsi branchés hydrauliquement en parallèle, et sont situés en aval de la partie haute température 25 du radiateur 26 en considérant le sens d'écoulement du liquide caloporteur à l'intérieur du circuit principal. Les conduites 28a à 28d sont reliées à une conduite de retour 29 permettant le retour du liquide caloporteur vers la pompe 23.

Le circuit principal de liquide caloporteur comprend, en outre, une branche de dérivation 30 apte à isoler la partie haute température 25. La branche de dérivation est reliée à la conduite 24 et à la conduite 28.

Le circuit auxiliaire de liquide caloporteur, monté en dérivation sur le circuit principal, comprend une conduite d'entrée 31 reliée à la conduite 27, et une conduite de sortie 32 reliée à la conduite 29.

La conduite d'entrée 31, traversant une partie basse température 33 du radiateur 26, est reliée à une conduite 34. Comme illustré plus visiblement sur la figure 2b, le radiateur 26 comprend la partie haute température 25 apte à refroidir le liquide caloporteur traversant la conduite 24 à une première température, et la partie basse température 33 apte à refroidir le liquide caloporteur traversant la conduite 31 à une deuxième température inférieure à la première température. En d'autres termes, le radiateur 26 comprend une entrée de liquide caloporteur et deux sorties dudit liquide caloporteur à des niveaux de températures différents.

La conduite 34 comprenant trois conduites dérivées, référencées respectivement 34a à 34c. La conduite 34a traverse l'échangeur post-cathodique 21 et la conduite 34b traverse l'échangeur post-anodique 19 pour réaliser le refroidissement des gaz d'échappement issus de la pile à combustible. La conduite 34c permet de détourner une partie du débit du liquide caloporteur traversant la conduite 34, issue de la partie basse température 33. Toutefois, il est également envisageable de ne pas prévoir une telle conduite 34c. L'échangeur post-anodique 19 et l'échangeur post-cathodique 21 sont ainsi branchés hydrauliquement en parallèle, et sont situés en aval de la partie basse température 33 du radiateur 26 en considérant le sens d'écoulement du liquide caloporteur à l'intérieur du circuit auxiliaire. Les conduites 34a à 34c sont reliées à la conduite de retour 32 permettant le retour du liquide caloporteur vers la pompe 23, par l'intermédiaire de la conduite 29.

Le circuit auxiliaire de liquide caloporteur comprend, en outre, une branche de dérivation 35 apte à isoler la partie basse température 33. La branche de dérivation est reliée à la conduite 31 et à la conduite 34.

Le fonctionnement du dispositif est le suivant : lors du démarrage de la pile à combustible 1, la pompe 23 est mise en marche et permet la circulation du liquide caloporteur. Le liquide caloporteur passe par la conduite 30 en contournant la partie haute température 25 du radiateur 26 et passe par la conduite 35 en contournant la partie basse température 33. Le liquide caloporteur traverse la pile à combustible 1, ainsi que les échangeurs thermiques 10 et 18 dans le circuit principal, et traverse les échangeurs thermiques 19 et 21 dans le circuit auxiliaire avant de revenir directement à la pompe 23.

Lorsque la pile à combustible 1 atteint une température supérieure à sa température de fonctionnement optimale, environ entre 80°C et 90°C, des vannes ou thermostats (non représentées) disposées au niveau des conduites 30 et 35 s'ouvrent progressivement de façon à permettre le passage du liquide caloporteur à travers la partie haute température 25. La partie basse température 33 du radiateur 26 reçoit une partie du débit du liquide caloporteur issu de la partie haute température 25. Le liquide caloporteur traversant la conduite 34 présente une température réduite, environ de 50°C, afin de refroidir les échangeurs de chaleur 19, 21 et de récupérer l'eau présente dans les gaz d'échappement de façon à obtenir un bilan d'eau de la pile à combustible positif.

Si la quantité de chaleur évacuée par le radiateur 26 est inférieure à la quantité de chaleur apportée par les échangeurs thermiques 10, 18, 19 et 21 alors la température du fluide caloporteur augmente provoquant ainsi une ouverture totale des vannes.

Si la quantité de chaleur évacuée par le radiateur 26 reste inférieure à la quantité de chaleur apportée au fluide caloporteur par les différents échangeurs thermiques 10, 18, 19 et 21 alors un ventilateur (non représente) est mis en marche afin d'augmenter la quantité de chaleur évacuée par le radiateur 26. La température du liquide caloporteur se stabilise lorsque la quantité de chaleur évacuée par le radiateur 26 est égale à la quantité de chaleur apportée au fluide caloporteur par les différents échangeurs thermiques 10, 18, 19 et 21.

Dans une variante de réalisation de l'invention, il est bien entendu envisageable de disposer deux radiateurs distincts remplaçant respectivement la partie haute température 25 et la partie basse température du radiateur 33 afin de réaliser le refroidissement du module de puissance.

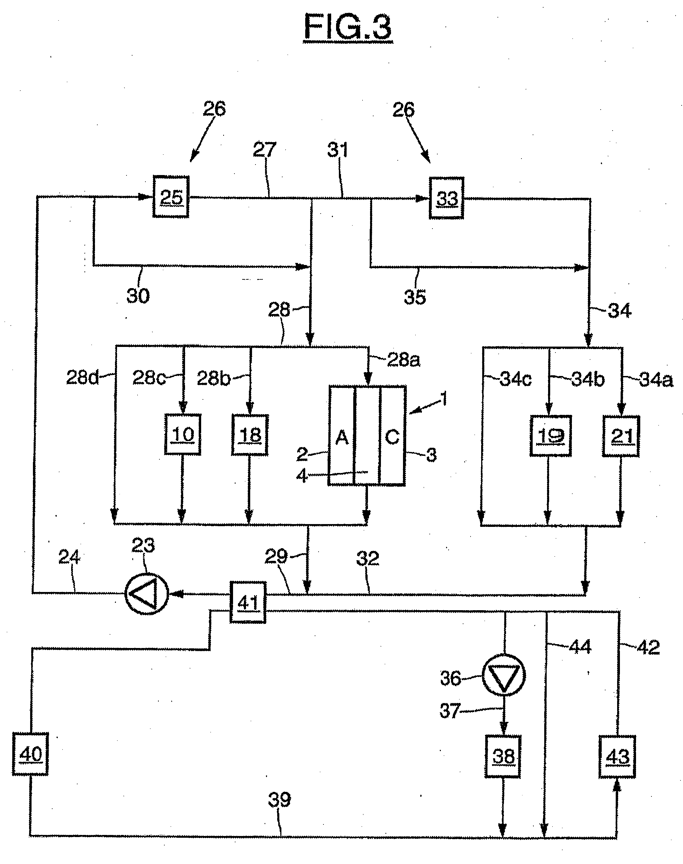

Sur la figure 3, sur laquelle les éléments identiques portent les mêmes références, un circuit de refroidissement conventionnel d'un groupe moto-propulseur est couplé avec le circuit de refroidissement du module de puissance de la pile à combustible 1.

Le circuit de refroidissement conventionnel comprend une pompe 36, permettant la circulation d'un liquide de refroidissement, reliée par l'intermédiaire d'une conduite 37 au groupe moto-propulseur 38. La conduite 37 est reliée à une conduite 39 traversant un aérotherme 40 destiné au chauffage de l'habitacle d'un véhicule automobile et un moyen de couplage 41 disposé en amont de la pompe, en considérant le sens de circulation du liquide de refroidissement. Le circuit de refroidissement conventionnel comprend également une conduite 42 reliant la conduite 39 entre le moyen de couplage 41 et la pompe 36, et la conduite 37 en aval du groupe moto-propulseur 38. La conduite 42 traverse un radiateur 43, pouvant être contourné par l'intermédiaire d'une branche de dérivation 44.

Le moyen de couplage 41, situé ici au niveau du circuit principal du circuit de refroidissement du module de puissance de la pile à combustible 1, est positionné en amont de la pompe 23 et est traversé par la conduite 29.

Dans le cas où le couplage du circuit de refroidissement conventionnel avec le circuit de refroidissement du module de puissance de la pile à combustible 1 est réalisé sans mélange de fluides, le moyen de couplage 41 est un échangeur de chaleur.

Dans le cas où le couplage du circuit de refroidissement conventionnel avec le circuit de refroidissement du module de puissance de la pile à combustible 1 est réalisé avec mélange de fluides, le moyen de couplage 41 peut être une conduite permettant de relier les deux circuits. Cette disposition présente l'avantage de répartir tous les éléments du module de puissance de la pile à combustible 1 à différents endroits dans le véhicule. Le couplage avec mélange de fluide peut être réalisé si le fluide caloporteur présente des caractéristiques acceptables par la pile à combustible 1. Sinon, il peut être nécessaire d'intégrer un dé-ioniseur en série ou parallèle avec la pile à combustible 1.

Avec un couplage du circuit de refroidissement du groupe moto-propulseur avec le circuit de refroidissement du module de puissance de la pile à combustible 1, il devient possible, lorsque le groupe moto-propulseur est éteint ou au ralenti, d'apporter les calories, générées par le module de puissance de la pile à combustible, au liquide de refroidissement du circuit de refroidissement du groupe moto-propulseur 38, permettant ainsi de chauffer l'habitacle du véhicule automobile par l'intermédiaire de l'aérotherme 40 et de maintenir en température le groupe moto-propulseur 38. Bien entendu, dans ce mode de fonctionnement, le liquide de refroidissement ne traverse pas le radiateur 43. Ce mode de fonctionnement permet également d'effectuer également une assistance au refroidissement du dispositif de refroidissement.

Lorsque le véhicule est en marche, le liquide caloporteur traverse le moyen de couplage 41 afin de récupérer les calories, générées par le groupe moto-propulseur 38, du liquide de refroidissement permettant ainsi d'effectuer une assistance au refroidissement du circuit de refroidissement du groupe moto-propulseur.

Il est également envisageable, de se servir du circuit de refroidissement du module de puissance de la pile à combustible 1 comme moyen de refroidissement ou de chauffage complémentaire d'une boucle de refroidissement d'une climatisation à eau en remplacement du circuit de refroidissement conventionnel d'un groupe moto-propulseur.

Il peut être également envisageable d'étendre le couplage avec un circuit d'eau chez un particulier pour une application stationnaire du système embarqué. Dans ce cas, le module de puissance pourrait fournir l'électricité et l'eau chaude. La voiture deviendrait aussi la source d'énergie et de chaleur du foyer.

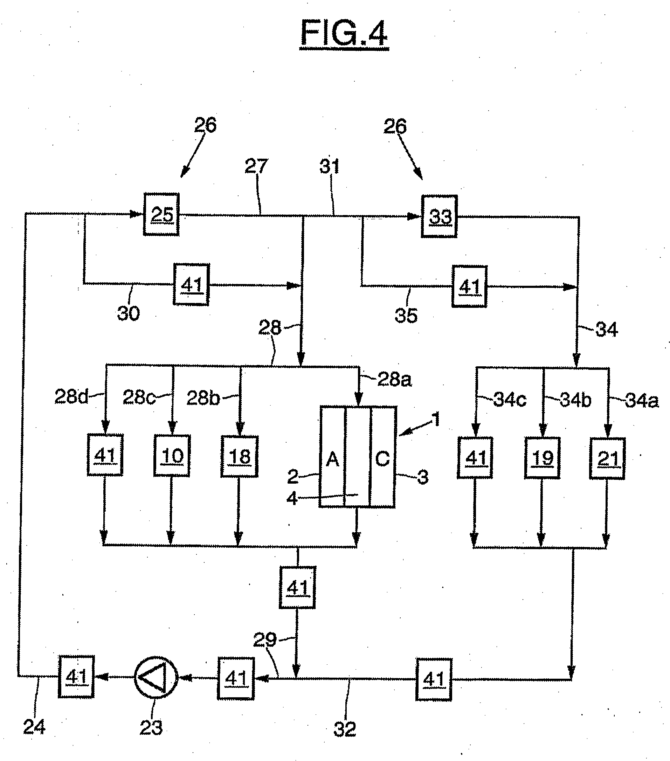

La figure 4, sur laquelle les éléments identiques portent les mêmes références, représente schématiquement les différentes positions envisageables pour réaliser le couplage du circuit de refroidissement conventionnel avec le dispositif de refroidissement du module de puissance de la pile à combustible 1, par l'intermédiaire du moyen de couplage 41.

Le moyen de couplage 41 peut être placé au niveau du circuit principal du liquide caloporteur sur la conduite 29 en amont de la pompe 23, ou sur la conduite 24 entre la pompe 23 et la partie haute température 25 du radiateur 26, sur la conduite de dérivation 30, ou encore sur la conduite 28d, ou encore sur la conduite 29 en amont de la conduite 32.

Le positionnement du moyen de couplage 41 en amont ou en aval de la pompe 23 permet de récupérer une forte puissance thermique à un niveau de température de l'ordre de celui de la pile et à fort débit.

Le positionnement du moyen de couplage 41 sur la conduite de dérivation 30 permet par exemple, d'utiliser l'inertie thermique du circuit auxiliaire de refroidissement pour refroidir le module de puissance de la pile à combustible 1. Dans ce cas, le moyen de couplage 41 sert de radiateur et l'on peut ne pas faire fonctionner le ventilateur associé au radiateur 26. Cependant, il est nécessaire de faire fonctionner la pompe 36 (figure 3). En termes de chauffage, ce positionnement permet, d'une manière analogue à précédemment de récupérer toute la puissance thermique du module de puissance.

Le positionnement du moyen de couplage 41 sur la conduite 28d, en parallèle des échangeurs thermiques 10 et 18 permet d'utiliser la capacité de refroidissement du module de puissance de la pile à combustible 1 pour refroidir le circuit de refroidissement du groupe moto-propulseur lorsque celui-ci est fortement sollicité.

Le positionnement du moyen de couplage 41 sur la conduite 29, lieu où la température du liquide caloporteur est la plus chaude, permet de récupérer une forte puissance thermique à un niveau de température de l'ordre de celui de la pile à combustible pour chauffer le liquide de refroidissement du circuit du groupe moto-propulseur ou du circuit de climatisation. Un tel positionnement permet, en outre, de minimiser les pertes de charges.

Le moyen de couplage 41 peut également être placé au niveau du circuit auxiliaire du liquide caloporteur sur la conduite de dérivation 35, ou sur la conduite de dérivation 34c, ou encore sur la conduite de retour 32.

Le positionnement du moyen de couplage 41 sur la conduite de retour 32 permet d'obtenir une flexibilité dans la gestion d'énergie. En effet, dans le cas où le fluide caloporteur travers la partie basse température 33 du radiateur 26, le moyen de couplage 41 peut être utiliser pour refroidir un composant basse température (une batterie par exemple). Dans le cas ou l'on bipasse la partie basse température 33 et les échangeurs post-anodique et post-cathodique 19 et 21, on peut récupérer une partie de la puissance du module pour réaliser du chauffage.

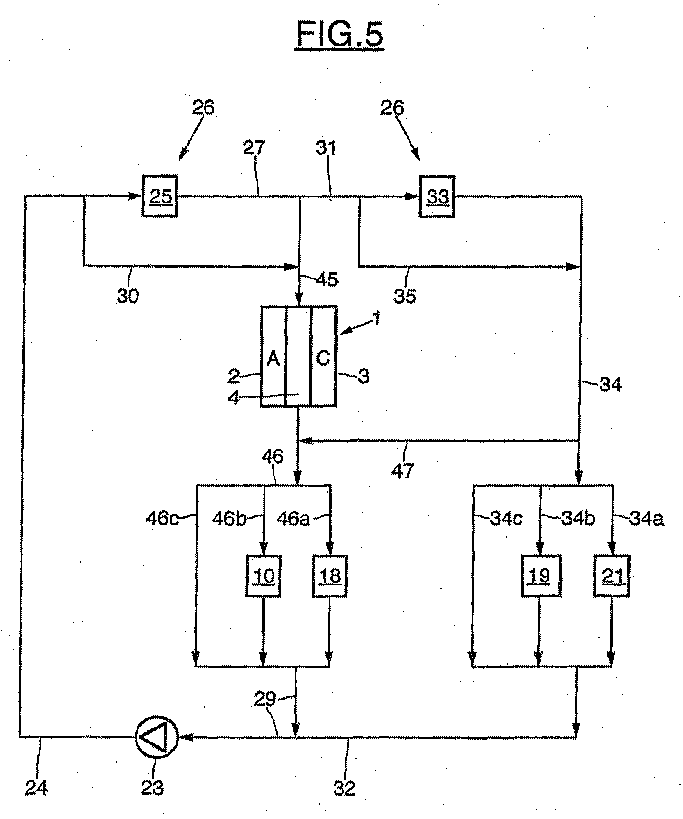

Dans la variante de réalisation du circuit de refroidissement du module de puissance comprenant la pile à combustible illustrée sur la figure 5, sur laquelle les éléments identiques portent les mêmes références, la conduite de sortie 27 de la partie haute température 25 est reliée à une conduite 45 traversant la membrane électrolytique 4 de la pile à combustible 1. La conduite 45 est reliée à une conduite 46 comprenant trois conduites dérivées, référencées respectivement 46a à 46c. La conduite 46a traverse l'échangeur pré-anodique 18, la conduite 46b traversant l'échangeur pré-cathodique 10. La conduite 46c permet de détourner une partie du débit du liquide caloporteur traversant la conduite 4. L'échangeur pré-anodique 18 et l'échangeur pré-cathodique 10 sont ainsi branchés hydrauliquement en parallèle, et sont situés en aval de la pile à combustible en considérant le sens d'écoulement du liquide caloporteur à l'intérieur du circuit principal. Les conduites 46a à 46c sont reliées à la conduite de retour 29 permettant le retour du liquide caloporteur vers la pompe 23.

Le circuit auxiliaire comprend, en outre par rapport au premier mode de réalisation, une conduite de dérivation 47 reliant la conduite 34 et la conduite 45 en aval de la pile à combustible 1, pouvant permettre de refroidir de façon plus importante les échangeurs pré-anodique et post-anodique 10 et 18.

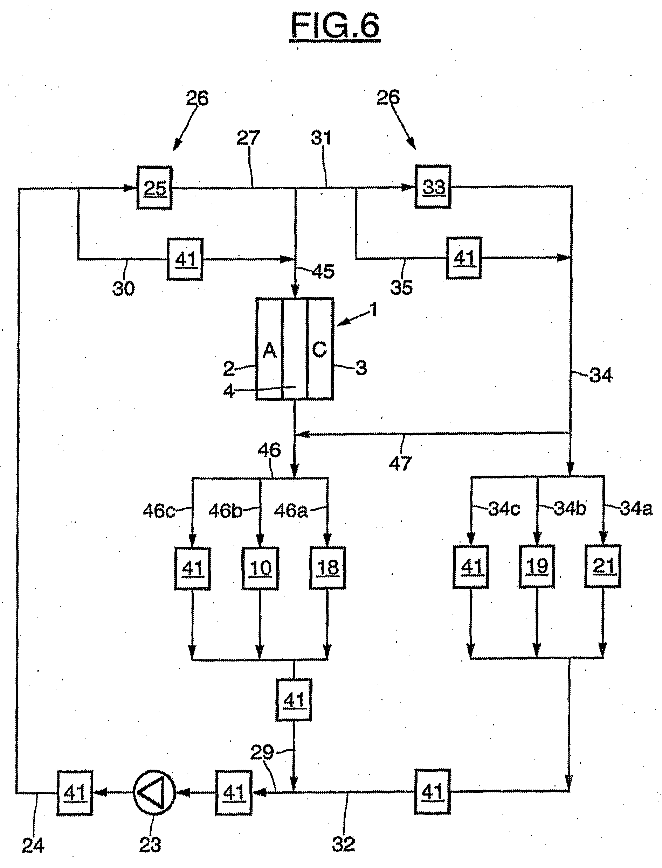

Sur la figure 6, sur laquelle les éléments identiques portent les mêmes références, sont représentées les différentes possibilités de couplage du dispositif de refroidissement avec une boucle de refroidissement d'un groupe motopropulseur ou avec une boucle de climatisation de l'habitacle:

Le moyen de couplage 41 peut être placé au niveau du circuit principal du liquide caloporteur sur la conduite 29 en amont de la pompe 23, ou sur la conduite 24 entre la pompe 23 et la partie haute température 25 du radiateur 26, ou sur la conduite de dérivation 30, ou sur la conduite 46c, ou encore sur la conduite 29 en amont de la conduite 32.

Le moyen de couplage 41 peut également être placé au niveau du circuit auxiliaire du liquide caloporteur sur la conduite de dérivation 35, ou sur la conduite de dérivation 34c, ou encore sur la conduite de retour 32.

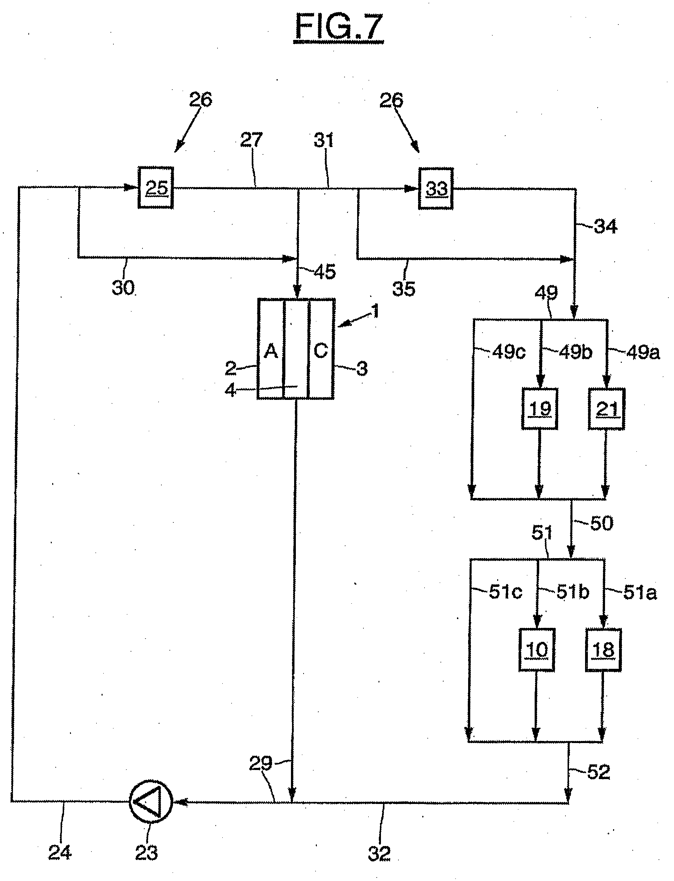

Dans la variante de réalisation du circuit de refroidissement du module de puissance comprenant la pile à combustible illustrée sur la figure 7, sur laquelle les éléments identiques portent les mêmes références la conduite de sortie 27 de la partie haute température 25 est reliée à une conduite 48 traversant la membrane électrolytique 4 de la pile à combustible 1 et reliant la conduite de retour 29 permettant le retour du liquide caloporteur vers la pompe 23.

La conduite 34 du circuit auxiliaire est reliée à une conduite 49 comprenant trois conduites dérivées, référencées respectivement 49a à 49c. La conduite 49a traverse l'échangeur post-cathodique 21, la conduite 49b traversant l'échangeur post-anodique 19. La conduite 49c permet de détourner une partie du débit du liquide caloporteur traversant la conduite 49. L'échangeur post-anodique 19 et l'échangeur post-cathodique 21 sont ainsi branchés hydrauliquement en parallèle. Les conduites 49a à 49c sont reliées à conduite 50, elle-même reliée à une conduite 51 comprenant trois conduites dérivées, référencées respectivement 51a à 51c. La conduite 51a traverse l'échangeur pré-anodique 18, la conduite 51b traversant l'échangeur pré-cathodique 10. La conduite 51c permet de détourner une partie du débit du liquide caloporteur traversant la conduite 51. L'échangeur pré-anodique 18 et l'échangeur pré-cathodique 10 sont ainsi branchés hydrauliquement en parallèle. Les conduites 51a à 51 c sont reliées à une conduite 52, elle-même reliée à la conduite 32.

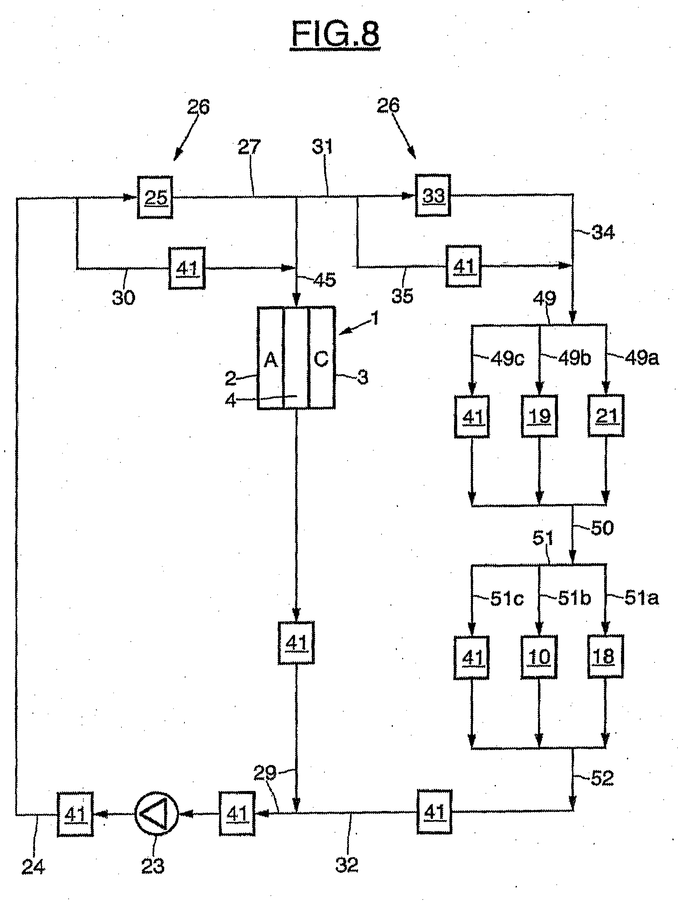

Sur la figure 8, sur laquelle les éléments identiques portent les mêmes références, sont représentées les différentes possibilités de couplage du dispositif de refroidissement avec une boucle de refroidissement d'un groupe motopropulseur ou avec une boucle de climatisation de l'habitacle.

Le moyen de couplage 41 peut être placé au niveau du circuit principal du liquide caloporteur sur la conduite 29 en amont de la pompe 23, ou sur la conduite 24 entre la pompe 23 et la partie haute température 25 du radiateur 26, ou sur la conduite de dérivation 30, ou encore sur la conduite 48 en aval de la pile à combustible 1.

Le moyen de couplage 41 peut également être placé au niveau du circuit auxiliaire du liquide caloporteur sur la conduite de dérivation 35, ou sur la conduite de dérivation 49c, ou sur la conduite 51c, ou encore sur la conduite de retour 32.

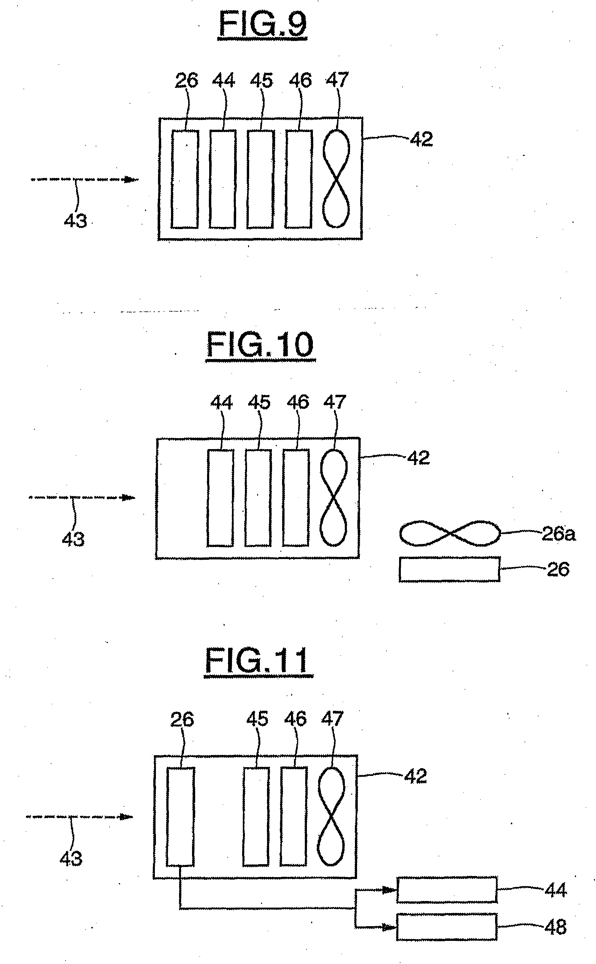

Sur la figure 9 est représenté schématiquement un mode d'intégration du radiateur 26 du dispositif de refroidissement au niveau d'une face avant 42 d'un véhicule automobile. La flèche 43 représente schématiquement l'air traversant la face avant 42 du véhicule automobile lorsqu'il roule. La face avant 42 comprend également un radiateur 44, par exemple un condenseur, de climatisation apte à permettre le refroidissement de l'air à l'intérieur de l'habitacle (non représenté), un radiateur 45 de sur-alimentation, classiquement utilisé pour refroidir l'air avant son entrée au niveau du turbo-compresseur de sur-alimentation (non représenté) du moteur et un radiateur 46 permettant le refroidissement dudit moteur. Le radiateur 46 comprend un ventilateur 47 apte à augmenter les puissances échangées pendant son activation. Les radiateurs 26, 44, 45 et 46 sont ainsi superposés.

En disposant le radiateur 26 au niveau de la face avant 42 du véhicule automobile, il devient ainsi possible de bénéficier de la vitesse de l'air lorsque le véhicule automobile roule et d'utiliser le ventilateur 47 afin d'augmenter la puissance échangée par le radiateur 26.

Sur la figure 10, sur laquelle les éléments identiques portent les mêmes références, le radiateur 26 est délocalisé par rapport à la face avant 42 du véhicule automobile. Le radiateur 26 comprend, en outre, un radiateur spécifique 26a.

Une telle disposition aéraulique permet n'interfère pas avec le système de refroidissement préexistant. En outre, il devient possible de concevoir un radiateur 26 et son ventilateur correspondant 26a selon la forme la plus adaptée pour le dispositif de refroidissement selon l'invention. La consommation énergétique du ventilateur 26 est, de plus, relativement réduite.

Sur la figure 11, sur laquelle les éléments identiques portent les mêmes références, le radiateur 26 est situé au niveau de la face avant 42 du véhicule automobile, le radiateur 44 étant délocalisé par rapport la face avant 42. Le radiateur 26 est agencé de façon à refroidir le liquide caloporteur traversant le module de puissance 48 et le condenseur 44 de climatisation. Cette disposition permet de refroidir le module de puissance 48 et le condenseur 44 de climatisation sans une augmentation significative de la consommation du ventilateur 47.

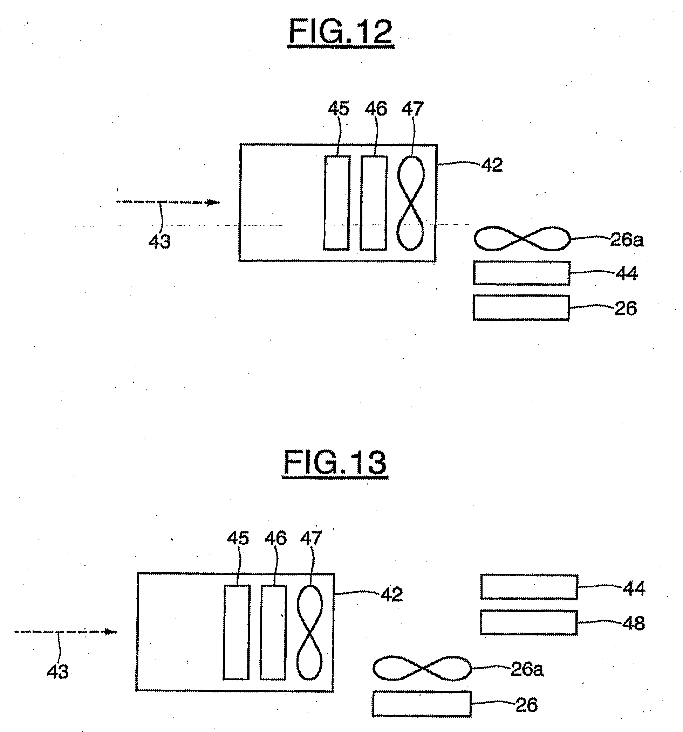

Sur la figure 12, sur laquelle les éléments identiques portent les mêmes références, les radiateurs 26 et 44 sont délocalisés par rapport à la face avant 42 du véhicule automobile. Cette disposition peur permettre de diminuer la puissance du ventilateur 47, de concevoir un ventilateur 26a de forme non conventionnelle. En outre,

Sur la figure 13, sur laquelle les éléments identiques portent les mêmes références, le radiateur 26 est délocalisé par rapport à la face avant 42 et permet le refroidissement du module de puissance 48 et du radiateur 44.

Quelque soit le mode de réalisation de l'invention et la configuration aéraulique retenue, le dispositif permet d'assurer un refroidissement de la pile à combustible et des différents gaz à l'entrée de la pile à une première température, avec un débit important permettant notamment de garder une température homogène à l'intérieur de la pile à combustible, et de réaliser avec le même fluide caloporteur le refroidissement d'autres. éléments à une deuxième température, inférieure à la première.

## Revendications

1. Dispositif de refroidissement d'un module de puissance comprenant une pile à combustible avec une partie anodique et une partie cathodique, notamment pour véhicule automobile, le dispositif comprenant un circuit principal de fluide caloporteur traversant la pile à combustible, **caractérisé par le fait que** le circuit principal de fluide caloporteur traverse une partie haute température (25) d'un radiateur (26) en amont de la pile à combustible, le dispositif comprenant en outre un circuit auxiliaire de fluide caloporteur, en dérivation sur le circuit principal pour recevoir une partie du fluide caloporteur dudit circuit principal issu de la partie haute température du radiateur, traversant une partie basse température (33) dudit radiateur (26) apte à refroidir le fluide caloporteur à une température inférieure à la température du fluide caloporteur dans le circuit principal.

2. Dispositif selon la revendication 1, dans lequel le circuit auxiliaire de fluide caloporteur comprend une conduite d'entrée (31) située entre la partie haute température (25) et la pile à combustible, et une conduite de retour (32) située entre la pile à combustible et une pompe (23) apte à permettre la circulation du fluide caloporteur.

3. Dispositif selon les revendications 1 ou 2, dans lequel le circuit principal comprend une branche de dérivation (30) apte à isoler la partie haute température (25).

4. Dispositif selon l'une quelconque des revendications précédentes, dans lequel le circuit secondaire comprend une branche de dérivation (35) apte à isoler la partie basse température (33).

5. Dispositif selon l'une quelconque des revendications précédentes, dans lequel le circuit auxiliaire comprend, en aval de la partie basse température (33), un échangeur de chaleur post-anodique (19) traversé par le fluide caloporteur et par les gaz issus de la partie anodique de la pile à combustible, et un échangeur de chaleur post-cathodique (21) traversé par le fluide caloporteur et par les gaz issus de la partie cathodique de la pile à combustible.

6. Dispositif selon l'une quelconque des revendications précédentes, comprenant un réformeur (11) alimentant en hydrogène la pile à combustible et un compresseur (6) alimentant en air la pile à combustible, dans lequel le circuit principal comprend, en aval de la partie haute température (25), un échangeur de chaleur pré-anodique (18) traversé par le fluide caloporteur et par l'hydrogène, et un échangeur de chaleur pré-cathodique (10) traversé par le fluide caloporteur et par l'air.

7. Dispositif selon la revendication 6, dans lequel l'échangeur de chaleur pré-cathodique (10) et l'échangeur de chaleur pré-anodique (18) sont montés en parallèle entre eux.

8. Dispositif selon les revendications 6 ou 7, dans lequel l'échangeur de chaleur pré-cathodique (10) et l'échangeur de chaleur pré-anodique (18) sont situés en aval de la pile à combustible.

9. Dispositif selon les revendications 6 ou 7, dans lequel l'échangeur de chaleur pré-cathodique (10) et l'échangeur de chaleur pré-anodique (18) sont montés en parallèle avec la pile à combustible.

10. Dispositif selon l'une quelconque des revendications 1 à 5, comprenant un réformeur (11) alimentant en hydrogène la pile à combustible et un compresseur (6) alimentant en air la pile à combustible, dans lequel le circuit auxiliaire comprend, en aval de la partie haute température (25), un échangeur de chaleur pré-anodique (18) traversé par le fluide caloporteur et par l'hydrogène, et un échangeur de chaleur pré-cathodique (10) traversé par le fluide caloporteur et par l'air.

11. Dispositif selon la revendication 10, dans lequel l'échangeur de chaleur pré-cathodique (10) et l'échangeur de chaleur pré-anodique (18) sont montés en parallèle entre eux, en aval des échangeurs post-anodique (19) et post-cathodique (21).

12. Dispositif selon l'une quelconque des revendications précédentes, pour véhicule automobile muni d'un groupe moto-propulseur équipé d'une boucle de refroidissement, comprenant des moyens de couplage thermique (41) avec la boucle de refroidissement du groupe moto-propulseur du véhicule automobile.

13. Dispositif selon la revendication 12, dans lequel le circuit principal comprend les moyens de couplage thermique, les moyens de couplage thermique étant situés sur la conduite de retour (29) du circuit principal en amont de la pompe.

14. Dispositif selon la revendication 12, dans lequel le circuit auxilaire comprend les moyens de couplage thermique, les moyens de couplage thermique étant situés sur la conduite de retour (32) du circuit auxiliaire.

15. Dispositif selon l'une quelconque des revendications précédentes, dans lequel le radiateur (26) est refroidi par l'air ambiant au moyen d'un ventilateur spécifique (26a), le radiateur (26) étant délocalisé par rapport à un radiateur moteur.

16. Dispositif selon la revendication 15, dans lequel un radiateur de climatisation (44) est également refroidi par le ventilateur spécifique (26a).

17. Procédé de refroidissement d'un module de puissance d'une pile à combustible au moyen d'une circulation d'un fluide caloporteur, **caractérisé par le fait qu'**il comprend les étapes au cours desquelles :
- on sépare en amont de la pile à combustible, le fluide caloporteur en un circuit principal et un circuit auxiliaire en dérivation sur le circuit principal pour recevoir une partie du fluide caloporteur dudit circuit principal,
- on fait circuler le fluide caloporteur dans les deux circuits à une température inférieure à la température de fonctionnement de la pile à combustible,
- on prélève les calories du fluide caloporteur du circuit principal lorsque la température du fluide caloporteur du circuit principal atteint la température de fonctionnement optimale de la pile à combustible, et
- on prélève les calories du fluide caloporteur du circuit auxiliaire de façon que la température du fluide caloporteur du circuit auxiliaire soit inférieure à la température du fluide caloporteur du circuit principal.

## Patentansprüche

1. Kühlvorrichtung eines Leistungsmoduls, das eine Brennstoffzelle mit einem Anodenteil und einem Kathodenteil enthält, insbesondere für ein Kraftfahrzeug, wobei die Vorrichtung einen die Brennstoffzelle durchquerenden Wärmeträgerfluid-Hauptkreislauf enthält, **dadurch gekennzeichnet, dass** der Wärmeträgerfluid-Hauptkreislauf einen Hochtemperaturbereich (25) eines Kühlers (26) stromaufwärts vor der Brennstoffzelle durchquert, wobei die Vorrichtung außerdem einen Wärmeträgerfluid-Nebenkreislauf in Abzweigung vom Hauptkreislauf enthält, um einen Teil des vom Hochtemperaturbereich des Kühlers stammenden Wärmeträgerfluids des Hauptkreislaufs zu empfangen, der einen Tieftemperaturbereich (33) des Kühlers (26) durchquert, der das Wärmeträgerfluid auf eine niedrigere Temperatur als die Temperatur des Wärmeträgerfluids im Hauptkreislauf herunterkühlen kann.

2. Vorrichtung nach Anspruch 1, wobei der Wärmeträgerfluid-Nebenkreislauf eine Eingangsleitung (31), die sich zwischen dem Hochtemperaturbereich (25) und der Brennstoffzelle befindet, und eine Rücklaufleitung (32) enthält, die sich zwischen der Brennstoffzelle und einer Pumpe (23) befindet, die den Kreislauf des Wärmeträgerfluids ermöglichen kann.

3. Vorrichtung nach Anspruch 1 oder 2, wobei der Hauptkreislauf einen Abzweigarm (30) enthält, der den Hochtemperaturbereich (25) isolieren kann.

4. Vorrichtung nach einem der vorhergehenden Ansprüche, wobei der Sekundärkreislauf einen Abzweigarm (35) enthält, der den Tieftemperaturbereich (33) isolieren kann.

5. Vorrichtung nach einem der vorhergehenden Ansprüche, wobei der Nebenkreislauf stromabwärts hinter dem Tieftemperaturbereich (33) einen vom Wärmeträgerfluid und von den vom Anodenteil der Brennstoffzelle stammenden Gasen durchquerten nach-anodischen Wärmetauscher (19) und einen vom Wärmeträgerfluid und von den vom Kathodenteil der Brennstoffzelle stammenden Gasen durchquerten nach-kathodischen Wärmetauscher (21) enthält.

6. Vorrichtung nach einem der vorhergehenden Ansprüche, die einen die Brennstoffzelle mit Wasserstoff versorgenden Reformer (11) und einen die Brennstoffzelle mit Luft versorgenden Kompressor (6) enthält, wobei der Hauptkreislauf stromabwärts hinter dem Hochtemperaturbereich (25) einen vom Wärmeträgerfluid und vom Wasserstoff durchquerten vor-anodischen Wärmetauscher (18) und einen vom Wärmeträgerfluid und von der Luft durchquerten vor-kathodischen Wärmetauscher (10) enthält.

7. Vorrichtung nach Anspruch 6, wobei der vor-kathodische Wärmetauscher (10) und der voranodische Wärmetauscher (18) parallel geschaltet sind.

8. Vorrichtung nach den Ansprüchen 6 oder 7, wobei der vor-kathodische Wärmetauscher (10) und der vor-anodische Wärmetauscher (18) sich stromabwärts hinter der Brennstoffzelle befinden.

9. Vorrichtung nach den Ansprüchen 6 oder 7, wobei der vor-kathodische Wärmetauscher (10) und der vor-anodische Wärmetauscher (18) mit der Brennstoffzelle parallel geschaltet sind.

10. Vorrichtung nach einem der Ansprüche 1 bis 5, die einen die Brennstoffzelle mit Wasserstoff versorgenden Reformer (11) und einen die Brennstoffzelle mit Luft versorgenden Kompressor (6) enthält, wobei der Nebenkreislauf stromabwärts hinter dem Hochtemperaturbereich (25) einen vom Wärmeträgerfluid und vom Wasserstoff durchquerten vor-anodischen Wärmetauscher (18) und einen vom Wärmeträgerfluid und von der Luft durchquerten vor-kathodischen Wärmetauscher (10) enthält.

11. Vorrichtung nach Anspruch 10, wobei der vor-kathodische Wärmetauscher (10) und der voranodische Wärmetauscher (18) stromabwärts hinter dem nach-anodischen (19) und dem nach-kathodischen (21) Wärmetauscher parallel geschaltet sind.

12. Vorrichtung nach einem der vorhergehenden Ansprüche für ein mit einer mit einer Kühlschleife ausgestatteten Antriebseinheit versehenes Kraftfahrzeug, die Wärmekopplungseinrichtungen (41) mit der Kühlschleife der Antriebseinheit des Kraftfahrzeugs enthält.

13. Vorrichtung nach Anspruch 12, wobei der Hauptkreislauf die Wärmekopplungseinrichtungen enthält, wobei die Wärmekopplungseinrichtungen sich auf der Rücklaufleitung (29) des Hauptkreislaufs stromaufwärts vor der Pumpe befinden.

14. Vorrichtung nach Anspruch 12, wobei der Nebenkreislauf die Wärmekopplungseinrichtungen enthält, wobei die Wärmekopplungseinrichtungen sich auf der Rücklaufleitung (32) des Nebenkreislaufs befinden.

15. Vorrichtung nach einem der vorhergehenden Ansprüche, wobei der Kühler (26) durch die Umgebungsluft mittels eines speziellen Lüfters (26a) gekühlt wird, wobei der Kühler (26) bezüglich eines Motorkühlers ausgelagert ist.

16. Vorrichtung nach Anspruch 15, wobei ein Kühler der Klimaanlage (44) ebenfalls vom speziellen Lüfter (26a) gekühlt wird.

17. Verfahren zum Kühlen eines Leistungsmoduls einer Brennstoffzelle mittels eines Kreislaufs eines Wärmeträgerfluids, **dadurch gekennzeichnet, dass** es die Schritte enthält, während denen:
- stromaufwärts vor der Brennstoffzelle das Wärmeträgerfluid in einen Hauptkreislauf und einen Nebenkreislauf in Abzweigung vom Hauptkreislauf aufgeteilt wird, um einen Teil des Wärmeträgerfluids des Hauptkreislaufs zu empfangen,
- das Wärmeträgerfluid in den zwei Kreisläufen mit einer Temperatur umgewälzt wird, die unter der Betriebstemperatur der Brennstoffzelle liegt,
- die Kalorien des Wärmeträgerfluids des Hauptkreislaufs entnommen werden, wenn die Temperatur des Wärmeträgerfluids des Hauptkreislaufs die optimale Betriebstemperatur der Brennstoffzelle erreicht, und
- die Kalorien des Wärmeträgerfluid des Nebenkreislaufs entnommen werden, damit die Temperatur des Wärmeträgerfluids des Nebenkreislaufs niedriger ist als die Temperatur des Wärmeträgerfluids des Hauptkreislaufs.

## Claims

1. Device for cooling a power module comprising a fuel cell with an anode part and a cathode part, in particular for a motor vehicle, the device comprising a primary heat-transfer fluid circuit passing through the fuel cell, **characterized in that** the primary heat-transfer fluid circuit passes through a high-temperature part (25) of a radiator (26) upstream of the fuel cell, the device further comprising an auxiliary heat-transfer fluid circuit, bypassing the primary circuit so as to receive some of the heat-transfer fluid from said primary circuit coming from the high-temperature part of the radiator, passing through a low-temperature part (33) of said radiator (26) able to cool the heat-transfer fluid to a temperature lower than the temperature of the heat-transfer fluid in the primary circuit.

2. Device according to Claim 1, wherein the auxiliary heat-transfer fluid circuit comprises an inlet conduit (31) arranged between the high-temperature part (25) and the fuel cell, and a return conduit (32) arranged between the fuel cell and a pump (23) able to allow the circulation of the heat-transfer fluid.

3. Device according to any one of Claims 1 or 2, wherein the primary circuit comprises a bypass branch (30) able to isolate the high-temperature part (25).

4. Device according to any one of the preceding claims, wherein the secondary circuit comprises a bypass branch (35) able to isolate the low-temperature part (33).

5. Device according to any one of the preceding claims, wherein the auxiliary circuit comprises, downstream of the low-temperature part (33), a post-anode heat exchanger (19) through which the heat-transfer fluid and the gases coming from the anode part of the fuel cell are passed, and a post-cathode heat exchanger (21), through which the heat-transfer fluid and the gases coming from the cathode part of the fuel cell are passed.

6. Device according to any one of the preceding claims, comprising a reformer (11) supplying hydrogen to the fuel cell and comprising a compressor (6) supplying air to the fuel cell, wherein the primary circuit comprises, downstream of the high-temperature part (25), a pre-anode heat exchanger (18) through which the heat-transfer fluid and hydrogen are passed, and a pre-cathode heat exchanger (10) through which the heat-transfer fluid and air are passed.

7. Device according to Claim 6, wherein the pre-cathode heat exchanger (10) and the pre-anode heat exchanger (18) are installed parallel to one another.

8. Device according to any one of Claims 6 or 7, wherein the pre-cathode heat exchanger (10) and the pre-anode heat exchanger (18) are arranged downstream of the fuel cell.

9. Device according to any one of Claims 6 or 7, wherein the pre-cathode heat exchanger (10) and the pre-anode heat exchanger (18) are installed parallel with the fuel cell.

10. Device according to any one of Claims 1 to 5, comprising a reformer (11) supplying hydrogen to the fuel cell and comprising a compressor (6) supplying air to the fuel cell, wherein the auxiliary circuit comprises, downstream of the high-temperature part (25), a pre-anode heat exchanger (18) through which the heat-transfer fluid and hydrogen are passed, and a pre-cathode heat exchanger (10) through which the heat-transfer fluid and air are passed.

11. Device according to Claim 10, wherein the pre-cathode heat exchanger (10) and the pre-anode heat exchanger (18) are installed parallel to one another, downstream of the post-anode exchanger (19) and post-cathode exchanger (21).

12. Device according to any one of the preceding claims, for a motor vehicle fitted with a powertrain assembly equipped with a cooling loop, comprising means (41) for thermal coupling with the cooling loop of the powertrain assembly of the motor vehicle.

13. Device according to Claim 12, wherein the primary circuit comprises thermal coupling means, the thermal coupling means being arranged over the return conduit (29) of the primary circuit upstream of the pump.

14. Device according to Claim 12, wherein the auxiliary circuit comprises thermal coupling means, the thermal coupling means being arranged over the return conduit (32) of the auxiliary circuit.

15. Device according to any one of the preceding claims, wherein the radiator (26) is cooled by the ambient air by means of a specific fan (26a), the radiator (26) being relocated with respect to an engine radiator.

16. Device according to Claim 15, wherein an air-conditioning radiator (44) is also cooled by the specific fan (26a).

17. Method for cooling a power module of a fuel cell by means of circulation of a heat-transfer fluid, **characterized in that** it comprises steps over the course of which:
- the heat-transfer fluid is separated, upstream of the fuel cell, between a primary circuit and an auxiliary circuit bypassing the primary circuit so as to receive some of the heat-transfer fluid from said primary circuit,
- the heat-transfer fluid is circulated in the two circuits at a temperature lower than the operating temperature of the fuel cell,
- calories are removed from the heat-transfer fluid in the primary circuit when the temperature of the heat-transfer fluid in the primary circuit reaches the optimum operating temperature of the fuel cell, and
- calories are removed from the heat-transfer fluid in the auxiliary circuit such that the temperature of the heat-transfer fluid in the auxiliary circuit is lower than the temperature of the heat-transfer fluid in the primary circuit.
